# EUROPEAN PATENT SPECIFICATION

(11) **EP 4 087 033 B1**
(45) Date of publication and mention of the grant of the patent: **27.11.2024**
(21) Application number: 21842476.0
(22) Date of filing: 14.07.2021
(51) Int. Cl.: H01M 50/166, H01M 50/183, H01M 50/153, H01M 50/109, H01M 10/04

(54) **BUTTON-TYPE SECONDARY BATTERY**
SEKUNDÄRBATTERIE VOM KNOPFTYP
BATTERIE SECONDAIRE DU TYPE BOUTON

(30) Priority: 14.07.2020 KR 20200087139
(43) Date of publication of application: 09.11.2022
(73) Proprietor: LG Energy Solution, Ltd., Seoul 07335 (KR)
(72) Inventor: KIM, Min Gyu, Daejeon 34122 (KR); KIM, Byung Sup, Daejeon 34122 (KR); SUNG, Joo Hwan, Daejeon 34122 (KR); LEE, Yong Gon, Daejeon 34122 (KR); LEE, Je Jun, Daejeon 34122 (KR); HWANGBO, Kwang Su, Daejeon 34122 (KR); MIN, Geon Woo, Daejeon 34122 (KR); CHO, Min Su, Daejeon 34122 (KR); CHAE, Sang Hak, Daejeon 34122 (KR)
(74) Representative: Hoffmann Eitle
(86) International application number: PCT/KR2021/009060
(87) International publication number: WO 2022/015058

(56) References cited:
- EP-A1- 3 550 631
- EP-B1- 3 255 714
- CN-U- 207 587 785
- JP-A- 2003 242 941
- KR-A- 20110 124 269
- KR-A- 20200 007 559
- KR-A- 20200 020 619
- US-A1- 2020 083 497
- US-A1- 2020 083 497

## Description

### TECHNICAL FIELD

The present invention relates to a button-type secondary battery having a shape having a diameter greater than a height thereof, and more particularly, to a button-type secondary battery in which an upper can and a lower can are more strongly coupled to each other by bending an end of the upper can to be fixed to a bottom surface of the lower can.

### BACKGROUND ART

A button-type battery commonly used as a coin-type battery or a button-type battery has a thin button shape of which a diameter is greater than a height and is widely used in various devices such as remote controllers, clocks, toys, computer parts, and the like.

Such a button-type battery is mainly manufactured as a non-rechargeable primary battery, but is also widely manufactured as a secondary battery that is chargeable and dischargeable as miniaturized devices are developed. Also, the button-type secondary battery also has a structure in which an electrode assembly and an electrolyte are embedded in a case to repeatedly perform charging and discharging, like the button-type secondary battery or the cylindrical or pouch-type secondary battery.

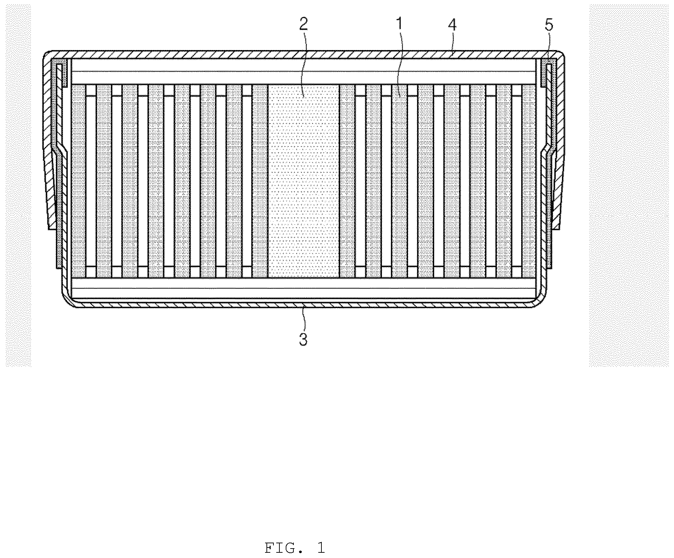

FIG. 1 is a cross-sectional view of a button-type secondary battery according to a related art.

As illustrated in the drawing, a button-type secondary battery has a structure, in which an upper can 4 and a lower can 3 are coupled to each other. Here, each of the upper can 4 and the lower can 3 has a flat cylindrical shape having a diameter greater than a height thereof, and the upper can 4 has a diameter slightly greater than that of the lower can 3.

An electrode assembly 1, in which a positive electrode, a separator, and a negative electrode are stacked, and an electrolyte (not shown) are mounted in the lower can 3. The electrode assembly 1 has a structure in which the separator, the negative electrode, the separator, and the positive electrode are put in and wound on a rotating core in order, and a center pin 2 is inserted into a center hole from which the core is removed. Also, a negative electrode tab (not shown) extending from the negative electrode and a positive electrode tab (not shown) extending from the positive electrode protrude, and the negative electrode tab and the positive electrode tab are bonded to the lower can 3 and the upper can 4, respectively.

In addition, in order to prevent short circuit from occurring when the upper can 4 and the lower can 3 are coupled to each other, an end of the upper can 4 may be coupled to the lower can 3 while being bent to press a gasket 5 in a state in which the gasket 5 having no conductivity is disposed at a contact point at which the upper can 4 and the lower can 3 are in contact with each other.

US 2020/083497 A1 concerns a rechargeable hearing aid battery with slotted grommet. The battery includes a first cup, having a first sidewall in a vertical direction along a circumference of a first flat portion, and a second cup, having a second sidewall in a vertical direction along a circumference of a second flat portion. The outer diameter of the first cup is less than the inner diameter of the second cup such that the first cup may be inserted into cavity. The battery further includes an active core comprising an electrode assembly and a grommet. The upper cup and active core are fixed in position relative to the second cup by folding or crimping an upper edge of the second cup over a top wall of the first cup.

### DISCLOSURE OF THE INVENTION

### TECHNICAL PROBLEM

However, the above-described coupling method has a problem in that the upper can and the lower can are separated from each other when the external impact is applied. Therefore, a main object of the present invention for solving the above problems is to provide a button-type secondary battery having a structure that is more robust to an external impact.

### TECHNICAL SOLUTION

A button-type secondary battery, in which an electrode assembly is mounted in a lower can, and an upper can is coupled to the lower can according to the present invention for achieving the above objects is defined in claim 1. The button-type secondary battery comprises: the lower can having a first sidewall in a vertical direction along a circumference of a first flat portion; an upper can having a second sidewall in a vertical direction along a circumference of a second flat portion, wherein the upper can is coupled to the lower can so that the second flat portion faces the first flat portion, and the second sidewall is disposed outside the first sidewall; an electrode assembly in which a negative electrode, a separator, and a positive electrode are wound in a state of being stacked and which is mounted in an inner space between the lower can and the upper can so that the negative electrode is connected to the lower can, and the positive electrode is connected to the upper can; and a gasket disposed between the second sidewall and the first sidewall to prevent the upper can and the lower can from being in contact with each other, wherein the second sidewall comprises a distant end that is bent to surround an edge configured to connect the first flat portion to the first sidewall and is disposed below the first flat portion, and the gasket extends to be disposed between the distal end and the first flat portion.

An exposed portion protruding to the outside through the distal end is formed on an end of the gasket, and the exposed portion is disposed below the first flat portion.

The exposed portion is expanded downward from the distal end and is bent to cover a portion of a bottom surface of the distal end.

The second sidewall may comprise: a body portion bent from the second flat portion; and an expansion portion configured to connect the body portion to the distal end having a diameter that is expanded rather than the body portion.

An inclined portion having an inclined cross-sectional shape to be gradually expanded in diameter may be formed between the body portion and the expansion portion. In addition, a connection point between the expansion portion and the distal end may be curved at a predetermined curvature.

The exposed portion exposed at the distal end may have a thickness that is capable of forming a flat surface together with the distal end.

A protrusion protruding downward to have the same height as the distal end may be disposed on the first flat portion.

The exposed portion exposed at the distal end may have a thickness that is capable of forming a flat surface together with the distal end, and a protrusion protruding downward to have the same height as the distal end may be disposed on the first flat portion so that the protrusion, the exposed portion, and the distal end form a flat surface.

Furthermore, the present invention may provide a secondary battery module in which the plurality of button-type secondary batteries, each of which has the above configuration, are electrically connected to each other.

### ADVANTAGEOUS EFFECTS

In the present invention having the above configuration, the distal end formed on the end of the second sidewall of the upper can may surround the edge connecting the first flat portion to the first sidewall and be bent to be parallel to the first flat portion to increase in coupling force between the upper can and the lower can compared to the structure according to the related art.

The exposed portion disposed below the first flat portion by passing through the distal end to protrude to the outside may be formed on the end of the gasket to more reliably prevent the electrical short between the upper can and the lower can from occurring.

Since the exposed portion forms a flat surface together with the distal end, the possibility of occurrence of the unintentional short circuit by the metal object may be more reduced.

Since the exposed portion is expanded downward from the distal end and is bent to cover a portion of the bottom surface of the distal end, the possibility of occurrence of the short circuit may be more reduced, and thus, the distal end may be protected against the physical impact.

### BRIEF DESCRIPTION OF THE DRAWINGS

FIG. 1 is a longitudinal cross-sectional view of a button-type secondary battery according to the related art.
FIG. 2 is a longitudinal cross-sectional view illustrating a state in which a distal end of an upper can is bent downward from a first flat portion of a lower can to couple the upper can to the lower can according to a first comparative example.
FIG. 3 is a longitudinal cross-sectional view illustrating a state in which an exposed portion increases in thickness to form a flat surface together with a distal end according to a second comparative example.
FIG. 4 is a longitudinal cross-sectional view illustrating a state in which the exposed portion increases in thickness and length to form a continuous flat surface between a protrusion and the distal end.
FIG. 5 is a longitudinal cross-sectional view illustrating a state in which an exposed portion is expanded downward from a distal end to have a bent shape so as to cover a portion of a bottom surface of the distal end according to an embodiment of the present invention.

### MODE FOR CARRYING OUT THE INVENTION

Hereinafter, comparative examples, not according to the claimed invention but useful for understanding the invention, and an embodiment of the present invention will be described in detail with reference to the accompanying drawings in such a manner that the technical idea of the present invention may easily be carried out by a person with ordinary skill in the art to which the invention pertains. The present invention may, however, be embodied in different forms within the scope of the appended claims and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a button-type secondary battery having a shape of which a diameter is greater than a height thereof and provides a button-type secondary battery having a structure in which a lower can 10 and an upper can 20 are more strongly coupled to each other. Hereinafter, embodiments according to the present invention will be described with reference to the accompanying drawings.

### First comparative example

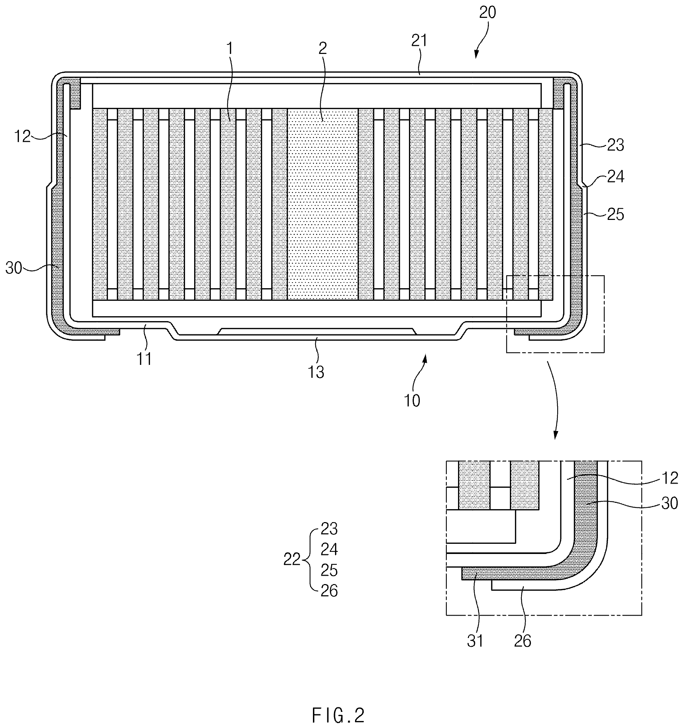

FIG. 2 is a longitudinal cross-sectional view illustrating a state in which a distal end 26 of an upper can 20 is bent downward from a first flat portion 11 of a lower can 10 to couple the upper can 20 to the lower can 10 according to a first comparative example not forming part of the claimed invention.

Referring to the drawings, in this comparative example, an electrode assembly 1 has a structure in which a separator, a negative electrode, a separator, and a positive electrode are sequentially put to be wound around a rotating core, and then a center pin 2 is inserted when the core is removed and also has a structure in which a positive electrode tab (not shown) extending from the positive electrode protrudes from one surface (a top surface in the drawing), and a negative electrode tab (not shown) extending from the negative electrode protrudes from the other surface (a bottom surface in the drawing). Also, before being completely inserted into the lower can 10, the negative electrode tab is bonded to the lower can 10, and the positive electrode tab is bonded to the upper can 20.

Also, the lower can 10 has a structure in which a first sidewall 11 is formed vertically upward along a circumference of the first flat portion 11 having a circular plate shape. When the electrode assembly 1 is seated in the lower can 10, a predetermined amount of electrolyte is injected.

The upper can 20 has a second sidewall 22 formed in a vertical direction along a circumference of the second flat portion 21 having a circular plate shape. Here, a diameter of the second flat portion 21 is slightly larger than that of the first flat portion 11, and thus, the first sidewall 12 may be inserted into the second sidewall 22.

Therefore, when the upper can 20 and the lower can 10 are coupled to each other, the second flat portion 21 may face the first flat portion 11, and the second sidewall portion 22 may be coupled in a state of being placed outside the first sidewall portion 12.

Furthermore, as described above, since the lower can 10 and the upper can 20 are in the state of being connected to the negative electrode tab and the positive electrode tab, respectively, the upper can 20 and the lower can 10 may be coupled to each other in a state in which a gasket 30 is inserted between the first sidewall 12 and the second sidewall 22, which corresponds to a point at which the upper can 20 and the lower can 10 are in contact with each other, so as to prevent short circuit from occurring. The gasket 30 has a sufficient length so that an end of the first sidewall 12 and the second flat portion 21 do not come into contact with each other, and one end of the gasket 30 is placed inside the first sidewall 12.

Also, the second sidewall 22 has a distal end 26 that is bent to surround an edge, at which the first flat portion 11 and the first sidewall 12 are connected, and is placed below the first flat portion 11. Here, the gasket 30 extends to be disposed between the distal end 26 and the first flat portion 11. Furthermore, the other end of the gasket 30 forms an exposed portion 31 protruding to the outside through the distal end 26.

Therefore, in the structure according to this comparative example, since the distal end 26 of the second sidewall 22 is disposed below the first flat portion 11 of the lower can 10 to prevent the lower can 10 from being separated, the separation of the lower can 10 may be strongly prevented compared to the conventional structure in which the upper can 20 and the lower can 10 are coupled to each other by press-fitting force therebetween.

The second sidewall 22 comprises a body portion 23 bent from the second flat portion 21 and an expansion portion 25 connecting the body portion 23 to the distal end 26 and expanded in diameter rather than the body portion 23. In addition, an inclined portion 24 having an inclined cross-sectional shape is formed between the body portion 23 and the expansion portion 25 so as to be gradually expanded in diameter.

Thus, when the lower can 10 is inserted into the upper can 20 before the distal end 26 is bent, the lower can 10 may be easily inserted, and also, since the gasket 30 is more pressed at an end-side (an upper side in the drawing) of the first sidewall 12, which is close to the inside of the lower can 10, sealing force may increase.

In addition, in the second side wall 22, the connection point between the expansion portion 25 and the distal end 26 may be curved at a predetermined curvature to prevent damage from occurring due to sharpness or a device, on which the secondary battery is mounted, from being scratched.

### Second comparative example

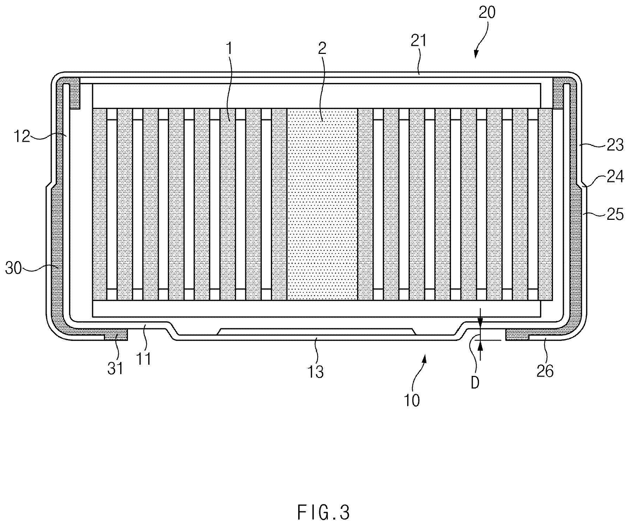

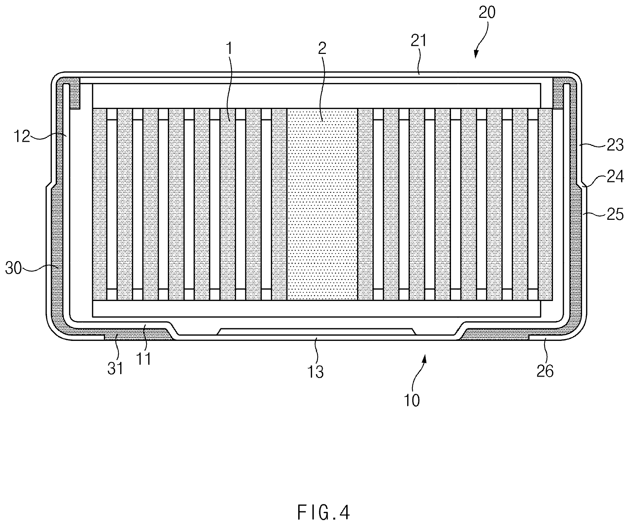

FIG. 3 is a longitudinal cross-sectional view illustrating a state in which an exposed portion 31 increases in thickness to form a flat surface together with a distal end 26 according to a second comparative example not forming part of the claimed invention, and FIG. 4 is a longitudinal cross-sectional view illustrating a state in which the exposed portion 31 increases in thickness and length to form a continuous flat surface between a protrusion 13 and the distal end 26.

Referring to FIGS. 3 and 4, in this comparative example, the exposed portion 31 of the gasket 30 protruding from the distal end 26 has a thickness D capable of forming a flat surface extending from the distal end 26.

In the comparative examples and in the present invention to be described below, a protrusion 13 convexly protruding downward to have the same height as the distal end 26 protrudes from the first flat portion 11 of the lower can 10. In the comparative examples and in the present invention to be described below, since the secondary battery has a structure that protrudes downward by the distal end 26 to a bottom surface of the secondary battery, the protrusion 13 is provided as a structure that protrudes to be in contact with a negative terminal of an external device to offset the portion protruding as described above.

Here, in the comparative example, since the exposed portion 31 has a thickness capable of forming the flat surface even with the protrusion 13, the protrusion 13, the exposed portion 31, and the distal end 26 may form a flat bottom surface in the button-type secondary battery. However, the flat surface may be discontinuously formed as illustrated in FIG. 3 or may be continuously formed as illustrated in FIG. 4 according to the length of the exposed portion 31.

Thus, in this comparative example, as the exposed portion 31 forms the flat surface, short circuit between the distal end 26 and the lower can 10 may be more effectively suppressed.

### Embodiment

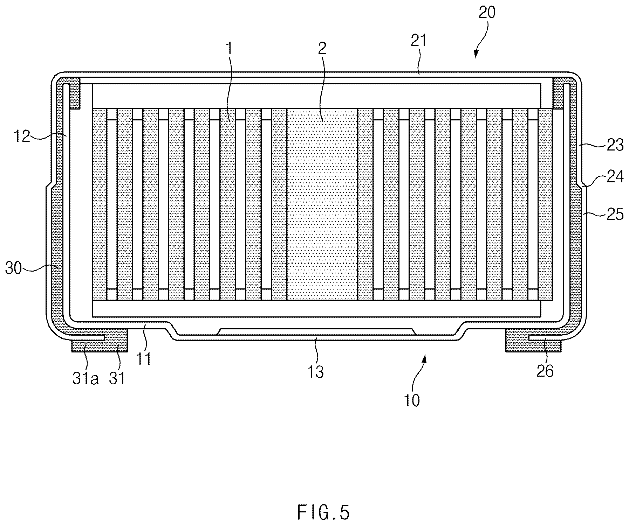

FIG. 5 is a longitudinal cross-sectional view illustrating a state in which an exposed portion 31 is expanded downward from a distal end 26 to have a bent shape so as to cover a portion of a bottom surface of the distal end 26 according to an embodiment of the present invention. Referring to FIG. 5, in the embodiment, the exposed portion 31 has a bent structure so that an end 31a of the exposed portion 31 is expanded downward from a distal end 26 to cover a portion of a bottom surface of the distal portion 26.

Due to the above-described structure, the distal end 26 and a lower can 10 may be more reliably disconnected to fundamentally prevent short circuit from occurring.

In addition, in the embodiment, since a gasket 30 having elasticity and insulating electricity is disposed at the uppermost end, when the secondary battery is stacked and seated, a surface of the secondary battery may be more efficiently prevented from being scratched, and when a plurality of secondary batteries are stacked in a longitudinal direction, electrical connection therebetween may be blocked.

In the present invention having the above configuration, the distal end 26 formed on an end of the second sidewall 22 of the upper can 20 is bent to surround an edge connecting a first flat portion 11 to a first sidewall 12 and is disposed below the first flat portion 11 to increase in coupling force between the upper can 20 and the lower can 10 compared to the conventional structure.

The exposed portion 31 disposed below the first flat portion 11 through the distal end 26 to protrude to the outside is formed on an end of the gasket 30 to more reliably prevent the electric short circuit from occurring between the upper can 20 and the lower can 10.

Since the exposed portion 31 forms a flat surface together with the distal end 26, the possibility of occurrence of the unintentional short circuit by the metal object may be more reduced.

Since the exposed portion 31 is expanded downward from the distal end 26 and is bent to cover a portion of the bottom surface of the distal end 26, the possibility of occurrence of the short circuit may be more reduced, and thus, the distal end 26 may be protected against a physical impact.

While the embodiment of the present invention has been described with reference to the specific embodiment, it will be apparent to those skilled in the art that various changes and modifications may be made within the scope of the invention as defined in the following claims.

### [Description of the Symbols]

- 10:: Lower can
- 11:: First flat portion
- 12:: First sidewall
- 20:: Upper can
- 21:: Second flat portion
- 22:: Second sidewall
- 26:: Distal end
- 30:: Gasket
- 31:: Exposed portion

## Claims

1. A button-type secondary battery, in which an electrode assembly (1) is mounted in a lower can (10), and an upper can (20) is coupled to the lower can (10), wherein the button-type secondary battery has a first end in a height direction, which is an upper end, and a second end in the height direction, which is a lower end, the button-type secondary battery comprising:
the lower can (10) having a first sidewall (12) in a vertical direction along a circumference of a first flat portion (11);
an upper can (20) having a second sidewall (22) in a vertical direction along a circumference of a second flat portion (21), wherein the upper can (20) is coupled to the lower can (10) so that the second flat portion (21) faces the first flat portion (11), and the second sidewall (22) is disposed outside the first sidewall (12);
an electrode assembly (1) in which a negative electrode, a separator, and a positive electrode are wound in a state of being stacked and which is mounted in an inner space between the lower can (10) and the upper can (20) so that the negative electrode is connected to the lower can (10), and the positive electrode is connected to the upper can (20); and
a gasket (30) disposed between the second sidewall (22) and the first sidewall (12) to prevent the upper can (20) and the lower can (10) from being in contact with each other,
wherein the second sidewall (22) comprises a distal end (26) that is bent to surround an edge configured to connect the first flat portion (11) to the first sidewall (12) and is disposed below the first flat portion (11), and
the gasket (30) extends to be disposed between the distal end (26) and the first flat portion (11),
wherein an exposed portion (31) protruding to the outside through the distal end (26) is formed on an end of the gasket (30), and
the exposed portion (31) is disposed below the first flat portion (11), and
the exposed portion (31) is expanded downward from the distal end (26) and is bent to cover a portion of a bottom surface of the distal end (26).

2. The button-type secondary battery of claim 1, wherein the second sidewall (22) comprises:
a body portion (23) bent from the second flat portion (21) ; and
an expansion portion (25) configured to connect the body portion (23) to the distal end (26) and having a diameter that is expanded rather than the body portion (23).

3. The button-type secondary battery of claim 2, wherein an inclined portion (24) having an inclined cross-sectional shape to be gradually expanded in diameter is formed between the body portion (23) and the expansion portion (25).

4. The button-type secondary battery of claim 2, wherein a connection point between the expansion portion (25) and the distal end (26) is curved at a predetermined curvature.

5. The button-type secondary battery of claim 1, wherein the exposed portion (31) exposed at the distal end (26) has a thickness that is capable of forming a flat surface together with the distal end (26).

6. The button-type secondary battery of claim 2, wherein a protrusion (13) protruding downward to have the same height as the distal end (26) is disposed on the first flat portion (11).

7. The button-type secondary battery of claim 2, wherein the exposed portion (31) exposed at the distal end (26) has a thickness (D) that is capable of forming a flat surface together with the distal end (26), and
a protrusion (13) protruding downward to have the same height as the distal end (26) is disposed on the first flat portion (11) so that the protrusion (13), the exposed portion (31), and the distal end (26) form a flat surface.

8. A secondary battery module in which a plurality of button-type secondary batteries of any one of claims 1 to 7 are electrically connected to each other.

## Patentansprüche

1. Sekundärbatterie vom Knopftyp, bei der eine Elektrodenanordnung (1) in einem unteren Behälter (10) montiert ist und ein oberer Behälter (20) mit dem unteren Behälter (10) gekoppelt ist, wobei die Sekundärbatterie vom Knopftyp ein erstes Ende in einer Höhenrichtung, das ein oberes Ende ist, und ein zweites Ende in der Höhenrichtung, das ein unteres Ende ist, aufweist, wobei die Sekundärbatterie vom Knopftyp Folgendes umfasst:
den unteren Behälter (10), der eine erste Seitenwand (12) in einer vertikalen Richtung entlang eines Umfangs eines ersten flachen Abschnitts (11) aufweist;
einen oberen Behälter (20) der eine zweite Seitenwand (22) in einer vertikalen Richtung entlang eines Umfangs eines zweiten flachen Abschnitts (21) aufweist, wobei der obere Behälter (20) mit dem unteren Behälter (10) so gekoppelt ist, dass der zweite flache Abschnitt (21) dem ersten flachen Abschnitt (11) zugewandt ist und die zweite Seitenwand (22) außerhalb der ersten Seitenwand (12) angeordnet ist;
eine Elektrodenanordnung (1), in der eine negative Elektrode, ein Separator und eine positive Elektrode in einem Zustand gewickelt sind, in dem sie gestapelt sind, und die in einem Innenraum zwischen dem unteren Behälter (10) und dem oberen Behälter (20) so montiert ist, dass die negative Elektrode mit dem unteren Behälter (10) verbunden ist und die positive Elektrode mit dem oberen Behälter (20) verbunden ist; und
eine Dichtung (30), die zwischen der zweiten Seitenwand (22) und der ersten Seitenwand (12) angeordnet ist, um zu verhindern, dass der obere Behälter (20) und der untere Behälter (10) miteinander in Kontakt kommen,
wobei die zweite Seitenwand (22) ein distales Ende (26) umfasst, das so gebogen ist, dass es eine Kante umgibt, die so konfiguriert ist, dass sie den ersten flachen Abschnitt (11) mit der ersten Seitenwand (12) verbindet, und das unterhalb des ersten flachen Abschnitts (11) angeordnet ist, und
die Dichtung (30) sich so erstreckt, dass sie zwischen dem distalen Ende (26) und dem ersten flachen Abschnitt (11) angeordnet ist,
wobei ein freiliegender Abschnitt (31), der durch das distale Ende (26) nach außen vorsteht, an einem Ende der Dichtung (30) gebildet ist, und
der freiliegende Abschnitt (31) unterhalb des ersten flachen Abschnitts (11) angeordnet ist, und
der freiliegende Abschnitt (31) von dem distalen Ende (26) nach unten erweitert ist und gebogen ist, um einen Abschnitt einer Bodenfläche des distalen Endes (26) zu bedecken.

2. Sekundärbatterie vom Knopftyp nach Anspruch 1, wobei die zweite Seitenwand (22) Folgendes umfasst:
einen Körperabschnitt (23), der von dem zweiten flachen Abschnitt (21) gebogen ist; und
einen Erweiterungsabschnitt (25), der so konfiguriert ist, dass er den Körperabschnitt (23) mit dem distalen Ende (26) verbindet, und der einen Durchmesser aufweist, der anstelle des Körperabschnitts (23) erweitert ist.

3. Sekundärbatterie vom Knopftyp nach Anspruch 2, wobei zwischen dem Körperabschnitt (23) und dem Erweiterungsabschnitt (25) ein geneigter Abschnitt (24) aufweisend eine geneigte Querschnittsform gebildet ist, die allmählich im Durchmesser erweitert wird.

4. Sekundärbatterie vom Knopftyp nach Anspruch 2, wobei ein Verbindungspunkt zwischen dem Erweiterungsabschnitt (25) und dem distalen Ende (26) mit einer vorbestimmten Krümmung gebogen ist.

5. Sekundärbatterie vom Knopftyp nach Anspruch 1, wobei der freiliegende Abschnitt (31), der an dem distalen Ende (26) freiliegt, eine Dicke aufweist, die in der Lage ist, zusammen mit dem distalen Ende (26) eine flache Oberfläche zu bilden.

6. Sekundärbatterie vom Knopftyp nach Anspruch 2, wobei ein Vorsprung (13), der nach unten vorsteht, um die gleiche Höhe wie das distale Ende (26) zu haben, auf dem ersten flachen Abschnitt (11) angeordnet ist.

7. Sekundärbatterie vom Knopftyp nach Anspruch 2, wobei der freiliegende Abschnitt (31), der an dem distalen Ende (26) freiliegt, eine Dicke (D) aufweist, die in der Lage ist, zusammen mit dem distalen Ende (26) eine flache Oberfläche zu bilden, und
ein Vorsprung (13), der nach unten vorsteht, um die gleiche Höhe wie das distale Ende (26) zu haben, auf dem ersten flachen Abschnitt (11) angeordnet ist, so dass der Vorsprung (13), der freiliegende Abschnitt (31) und das distale Ende (26) eine flache Oberfläche bilden.

8. Sekundärbatteriemodul, in dem eine Vielzahl von Sekundärbatterien vom Knopftyp nach einem der Ansprüche 1 bis 7 elektrisch miteinander verbunden sind.

## Revendications

1. Batterie secondaire de type bouton, dans laquelle un ensemble d'électrode (1) est monté dans un compartiment inférieur (10), et un compartiment supérieur (20) est couplé au compartiment inférieur (10), dans laquelle la batterie secondaire de type bouton présente une première extrémité dans une direction en hauteur, laquelle est une extrémité supérieure, et une seconde extrémité dans la direction en hauteur, laquelle est une extrémité inférieure, la batterie secondaire de type bouton comprenant :
le compartiment inférieur (10) présentant une première paroi latérale (12) dans une direction verticale le long d'une circonférence d'une première partie plate (11) ;
un compartiment supérieur (20) présentant une seconde paroi latérale (22) dans une direction verticale le long d'une circonférence d'une seconde partie plate (21), dans laquelle le compartiment supérieur (20) est couplé au compartiment inférieur (10) de sorte que la seconde partie plate (21) fasse face à la première partie plate (11), et la seconde paroi latérale (22) est disposée à l'extérieur de la première paroi latérale (12) ;
un ensemble d'électrode (1) dans laquelle une électrode négative, un séparateur et une électrode positive sont enroulés dans un état où ils sont empilés et qui est monté dans un espace interne entre le compartiment inférieur (10) et le compartiment supérieur (20) de sorte que l'électrode négative soit reliée au compartiment inférieur (10), et l'électrode positive soit reliée au compartiment supérieur (20) ; et
un joint d'étanchéité (30) disposé entre la seconde paroi latérale (22) et la première paroi latérale (12) afin d'empêcher le compartiment supérieur (20) et le compartiment inférieur (10) d'être en contact l'un avec l'autre,
dans laquelle la seconde paroi latérale (22) comprend une extrémité distale (26) qui est courbée pour entourer un bord configuré pour relier la première partie plate (11) à la première paroi latérale (12) et est disposée au-dessous de la première partie plate (11), et
le joint d'étanchéité (30) s'étend pour être disposé entre l'extrémité distale (26) et la première partie plate (11),
dans laquelle une partie exposée (31) qui fait saillie vers l'extérieur à travers l'extrémité distale (26) est formée sur une extrémité du joint d'étanchéité (30), et
la partie exposée (31) est disposée entre la première partie plate (11), et
la partie exposée (31) est déployée vers le bas à partir de l'extrémité distale (26) et est courbée pour recouvrir une partie d'une surface inférieure de l'extrémité distale (26).

2. Batterie secondaire de type bouton selon la revendication 1, dans laquelle la seconde paroi latérale (22) comprend :
une partie de corps (23) courbée à partir de la seconde partie plate (21) ; et
une partie de déploiement (25) configurée pour relier la partie de corps (23) à l'extrémité distale (26) et présentant un diamètre qui est déployé plutôt que la partie de corps (23).

3. Batterie secondaire de type bouton selon la revendication 2, dans laquelle une partie inclinée (24) présentant une forme inclinée en coupe transversale pour que le diamètre se déploie petit à petit est formée entre la partie de corps (23) et la partie de déploiement (25).

4. Batterie secondaire de type bouton selon la revendication 2, dans laquelle un point de liaison entre la partie de déploiement (25) et l'extrémité distale (26) est courbé au niveau d'une courbure prédéterminée.

5. Batterie secondaire de type bouton selon la revendication 1, dans laquelle la partie exposée (31) qui est exposée au niveau de l'extrémité distale (26) présente une épaisseur qui est apte à former une surface plate conjointement avec l'extrémité distale (26).

6. Batterie secondaire de type bouton selon la revendication 2, dans laquelle une saillie (13) qui fait saillie vers le bas pour avoir la même hauteur que l'extrémité distale (26) est disposée sur la première partie plate (11).

7. Batterie secondaire de type bouton selon la revendication 2, dans laquelle la partie exposée (31) qui est exposée au niveau de l'extrémité distale (26) présente une épaisseur (D) qui est apte à former une surface plate conjointement avec l'extrémité distale (26), et
une saillie (13) qui fait saillie vers le bas pour avoir la même hauteur que l'extrémité distale (26) est disposée sur la première partie plate (11) de sorte que la saillie (13), la partie exposée (31), et l'extrémité distale (26) forment une surface plate.

8. Module de batterie secondaire dans lequel une pluralité de batteries secondaires de type bouton selon l'une quelconque des revendications 1 à 7 sont reliées électriquement les unes aux autres.
